# EUROPÄISCHE PATENTSCHRIFT

(11) **EP 0 429 819 B1**
(45) Veröffentlichungstag und Bekanntmachung des Hinweises auf die Patenterteilung: **31.03.1993**
(21) Anmeldenummer: 90119651.9
(22) Anmeldetag: 13.10.1990
(51) Int. Cl.: F02D 41/14, G01D 5/245

(54) **Einrichtung zur Erfassung einer periodisch schwankenden Grösse einer Brennkraftmaschine**
Device for measuring a periodically fluctuating variable in an internal combustion engine
Dispositif pour mesurer une grandeur fluctuant périodiquement dans un moteur à combustion interne

(30) Priorität: 25.11.1989 DE 3939114
(43) Veröffentlichungstag der Anmeldung: 05.06.1991
(73) Patentinhaber: ROBERT BOSCH GMBH, 70442 Stuttgart (DE)
(72) Erfinder: Birk, Manfred, Dipl.-Ing., W-7141 Oberriexingen (DE); Mayer, Axel, Dipl.-Ing., W-8000 München 40 (DE)

(56) Entgegenhaltungen:
- WO-A-88/03607
- US-A- 3 241 077
- ELEKTRONIK. vol. 30, no. 4, 27 Februar 1981, MUNCHEN DE Seiten 95 - 96; K.Kraus: "Spannungsgesteuerte Universalfilter"

## Beschreibung

### Stand der Technik

Die Erfindung geht aus von einer Einrichtung nach der Gattung des Hauptanspruchs.

Es ist beispielsweise aus der DE-OS 32 23 328 bekannt, daß bei einer Brennkraftmaschine üblicherweise zu erfassende Betriebsparameter, beispielsweise Drehzahl, Saugrohrdruck oder Ansaugluftmasse quasikontinuierliche Größen sind, die im Arbeitstrakt der Brennkraftmaschine schwanken. Bei herkömmlichen Regelungen von Brennkraftmaschinen, bei denen keine hohen Anforderungen an die Genauigkeit gestellt werden, wird ein Mittelwert dieser Meßgrößen verarbeitet, der einem länger andauernden zeitlichen Mittelwert entspricht. Bei der Regelung moderner Brennkraftmaschinen, beispielsweise bei einer Kennfeld-gesteuerten Regeleinrichtung für die Zündung, die Einspritzung und dergleichen, ist es jedoch erforderlich, diese Werte genauer und schneller zu erfassen.

Eine Einrichtung, mit der eine periodisch schwankende Größe einer Brennkraftmaschine, nämlich der Unterdruck im Ansaugrohr oder die Drehzahl einer Welle der Brennkraftmaschine relativ schnell erfaßt werden kann, wird in der breits erwähnten DE-OS 32 23 328 beschrieben. Bei dieser Einrichtung wird die Drehzahl beziehungsweise der Druck einmal pro Zündabstand zündungssynchron gemessen und aus dem so erhaltenenen Augenblickswert der Drehzahl beziehungsweise des Druckes ein Mittelwert berechnet. Bei einer Phasenverschiebung der periodisch schwankenden Größe treten jedoch mit der in der DE-OS 32 23 328 angegebene Einrichtung Fehler bei der Mittelwertbildung auf.

Aus der WO-A- 88 03 607 ist bekannt, im Zusammenhang mit einer Steuerung und Regelung in Brennkraftmaschinen von Kraftfahrzeugen das von einem Sensor, beispielsweise einem Drehzahlsensor gelieferte Signal vor der Weiterverarbeitung in einem Tiefpass oder einem Bychip-Bandpass zu filtern. Beide Filter sind jedoch nicht veränderbar, so daß eine optimale Anpassung der Filter an die zu filternden Signale nicht möglich ist.

Aus der US-A 3 241 077 ist bekannt, bei einer Regeleinrichtung für Flugzeuge zur Unterdrückung von Schwingungen des Flugzeugkörpers selbstadaptive Filter mit veränderbarer Mittenfrequenz einzusetzen, die Sensorsignale in geeigneter Weise filtern. Aus dieser Druckschrift ist jedoch nicht bekannt, solche Filter auch im Zusammenhang mit einer Steuerung oder Regelung eines Kraftfahrzeuges zu verwenden.

### Vorteile der Erfindung

Die erfindungsgemäße Einrichtung mit den kennzeichnenden Merkmalen des Hauptanspruchs hat gegenüber den bekannten Einrichtungen den Vorteil, daß sich durch die Filterung der periodisch schwankenden Größe in einer Bandsperre ein Signal ergibt, das den Mittelwert der periodisch schwankenden Größe dynamisch möglichst gut wiedergibt. Da die Mittenfrequenz der Bandsperre an die jeweilgen Erfordernisse anpaßbar ist, wird in jedem Frequenzbereich der periodisch schwankenden Größe ein fehlerfreier Mittelwert erhalten.

Durch die in den Unteransprüchen aufgeführten Maßnahmen sind vorteilhafte Weiterbildungen der im Hauptanspruch angegebenen Einrichtung möglich.

### Zeichnung

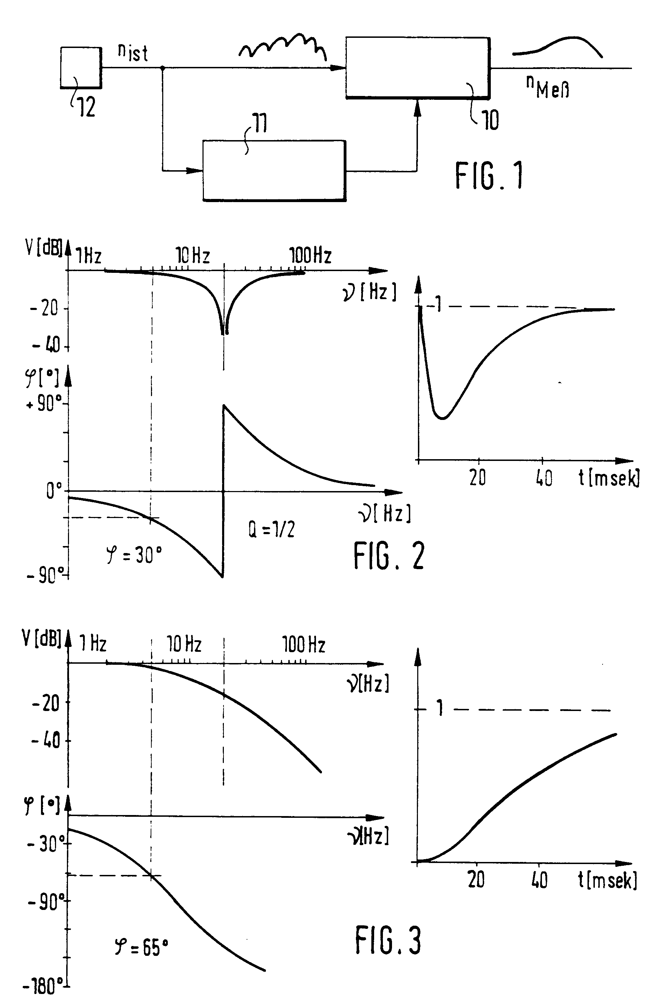

In Figur 1 ist ein Blockschaltbild dargestellt, das den wesentlichen Gedanken der Erfindung aufzeigt, in Figur 2 ist ein Beispiel für einen Frequenzgang und eine Sprungantwort einer adaptiven Bandsperre zweiter Ordnung dargestellt und in Figur 3 ist der Frequenzgang beziehungsweise die Sprungantwort für einen adaptiven Tiefpaß zweiter Ordnung zum Vergleich dargestellt.

### Beschreibung des Ausführungsbeispiels

Im Blockschaltbild nach Figur 1 ist mit 10 eine adaptive Bandsperre zweiter Ordnung angegeben, der das vom Sensor gelieferte Signal Uᵢₛₜ zugeführt wird. Mit 11 ist eine Filteransteuerung bezeichnet, der das Signal Uᵢₛₜ ebenfalls zugeführt wird. In der Einrichtung zur Filteransteuerung wird aus dem Signal Uᵢₛₜ ein Signal gebildet, das der adaptiven Bandsperre 10 zugeführt wird und deren Bandmitte in Abhängigkeit vom Sensorausgangssignal Uᵢₛₜ beeinflußt.

Das erwähnte Ausgangssignals des Sensors Uᵢₛₜ ist eine im Arbeitstakt der Brennkraftmaschine periodisch schwankende Größe, beispielsweise die Drehzahl einer Welle, der Saugrohrdruck oder die Ansaugluftmasse. In Figur 1 ist der Sensor, der diese Größe erfaßt, mit 12 bezeichnet.

Am Ausgang der Bandsperre 10 wird ein geglättetes beziehungsweise gefiltertes Ausgangssignal U_{Meß} erhalten, das einen den Mittelwert der periodisch schwankenden Größe dynamisch möglichst gut entsprechenden Verlauf aufweist und zur weiteren Verarbeitung verwendet werden kann.

Wenn die zu erfassende periodisch schwankende Größe der Brennkraftmaschine die Drehzahl ist, wird als Sensor 12 ein beliebiger Drehzahlsensor, beispielsweise ein Tachogenerator oder ein Inkrementgeber beziehungsweise Inkrementsensor mit Frequenz-Spannungswandler verwendet, dessen Ausgangssignal Uᵢₛₜ darstellt. Dabei wird mit dem Sensor ein mit einer Welle der Brennkraftmaschine verbundenes Inkrementrad abgetastet.

Ist als Meßgröße der Saugrohrdruck der Brennkraftmaschine vorgesehen, so entspricht der Sensor 12 einem Drucksensor, der im Saugrohr befestigt ist. Entsprechendes gilt für die Ansaugluftmasse, zu deren Erfassung ein entsprechender Luftmassensensor im Ansaugrohr der Brennkraftmaschine befestigt ist.

Die Beschreibung der Funktionsweise der erfindungsgemäßen Einrichtung soll nun anhand einer Drehzahlermittlung näher erläutert werden.

Bei einem Vierzylindermotor beträgt die Zündfrequenz bei 600 Umdrehungen pro Minute 20 Hertz. Die analoge Drehzahl, die beispielsweise mit einem Tachogenerator oder einem Inkrementgeber gemessen wird, erzeugt in diesem Geber eine Ausgangsspannung Uᵢₛₜ, die auf die Bandsperre 10 aufgeschaltet wird. Die Bandmitte der Bandsperre 10 wird in diesem Fall so gewählt, daß die Bandmitte auf 20 Hertz eingestellt wird. Die Güte der Bandsperre, die einer Bandsperre zweiter Ordnung entspricht, wird mit Q = 0,5 so gering gewählt, daß bei einer Störfrequenz von beispielsweise 20 Hertz eine ausreichende Dämpfung der periodischen Schwankung auch dann noch erzielt wird, wenn die Bandmitte im Bereich von 18 Hertz bis 22 Hertz liegt. Dadurch ist gewährleistet, daß auch bei einem Fehler der Filteradaption, besonders bei schneller Drehzahländerung die Störunterdrückung noch gewährleistet ist. Die Güte der Bandsperre muß nicht unbedingt Q=0,5 betragen, sie kann vielmehr an das jeweils auftretende Problem angepaßt werden. Der breite Filtersperrbereich sorgt dafür, daß der Einfluß der Drehzahlschwankung auf die Filteraussteuerung so gering ist, daß die Störimpulsunterdrückung trotzdem gewährleistet ist.

Wesentlich ist, daß die Bandmittenfrequenz keine starre Größe ist, sondern vielmehr an die Gegebenheiten anpaßbar ist. Dabei soll die Anpassung (Adaption) der Mittenfrequenz in Abhängigkeit von der Drehzahl oder der Zündfrequenz vorgenommen werden.

Wenn die Drehzahlauswertung lediglich im Leerlaufbetrieb erfolgen soll, kann auf eine Filteradaption verzichtet werden. Es wird dann ein Arbeitsbereich von etwa 700 Umdrehungen pro Minute ± 100 Umdrehungen pro Minute vorgesehen. Die Güte der Bandsperre wird dann so gewählt, daß gerade in diesem Arbeitsbereich eine ausreichende Dämpfung der Drehzahlschwankung erreicht wird.

Der Einsatz einer Bandsperre zweiter Ordnung zur Filterung des Sensorausgangssignals ermöglicht eine ausreichende Dämpfung und liefert ein Drehzahlsignal, daß den Mittelwert der Drehzahl dynamisch gut wiedergibt.

In Figur 2 ist der Frequenzgang und die Sprungantwort einer adaptiven Bandsperre zweiter Ordnung angegeben, zum Vergleich ist der Frequenzgang sowie die Sprungantwort für einen adaptiven Tiefpaß zweiter Ordnung in Figur 3 aufgetragen. In den genannten Figuren ist jeweils die Dämpfung V in Dezibel (dB) und die Phasenverschiebung φ in Grad (o) über der Frequenz in Hertz (Hz) aufgetragen. Weiterhin ist angegeben, mit welchem Zeitverhalten (t) eine Sprungantwort den Endwert 1 erreicht. Dabei sind die in Figur 2 angegebenen Kurven für den Tiefpaß aus der Literatur als "Bode-Diagramm" beziehungsweise "Rechteckverhalten" eines Tiefpasses prinzipiell aus der Literatur, beispielsweise aus "Tietze-Schenk, Halbleiterschaltungstechnik, 3. Auflage, 1976, S. 14-15", bekannt.

Aus den Figuren 2 und 3 ist zu erkennen, daß bei einer Störfrequenz von 20 Hertz die Dämpfung größer als 16 dB ist. Die Phasendrehung beträgt beim adaptiven Tiefpaß bei 5 Hertz minus 62 Grad, bei der adaptiven Bandsperre bei der selben Frequenz minus 30 Grad. Daraus ist zu erkennen, daß die Filterung mit einer Bandsperre einen deutlichen Phasenvorteil gegenüber der Filterung mit einem Tiefpaß aufweist. Durch die Adaption der Mittenfrequenz der Bandsperre nimmt die Phasenverschiebung mit zunehmender Drehzahl ab.

Die Realisierung der Bandsperre kann digital oder analog erfolgen. Dabei kann die analoge Hardware-Realisierung mit sogenannten "Switched capacitor" Bausteinen realisiert werden. Bei diesem Aufbau kann die Bandmittenfrequenz durch ein Steuersignal einfach verändert werden.

## Patentansprüche

1. Erfassungseinrichtung einer periodisch schwankenden Größe bei einer Brennkraftmaschine in einem Kraftfahrzeug, mit einem Sensor, der ein periodisch schwankendes Ausgangssignal liefert, das einer Filtereinrichtung zugeführt wird, dadurch gekennzeichnet, daß die Filtereinrichtung eine Bandsperre ist, deren Mittenfrequenz veränderbar ist und daß das Ausgangssignal der Bandsperre zur weiteren Verarbeitung verwendet wird.

2. Vorrichtung nach Anspruch 1, dadurch gekennzeichnet, daß die Mittenfrequenz der Bandsperre in Abhängigkeit von der Zündfrequenz oder der Frequenz anderer Störquellen verändert wird.

3. Einrichtung nach Anspruch 1, dadurch gekennzeichnet, daß die Mittenfrequenz der Bandsperre in Abhängigkeit von vorhergehenden Drehzahlwerten verändert wird.

4. Einrichtung nach Anspruch 1, dadurch gekennzeichnet, daß die Mittenfrequenz der Bandsperre so gewählt wird, daß sie der Zündfrequenz entspricht.

5. Einrichtung nach einem der vorgehenden Ansprüche, dadurch gekennzeichnet, daß die Güte der Bandsperre etwa Q = 0,5 beträgt.

6. Einrichtung nach einem der Ansprüche 1 bis 4, dadurch gekennzeichnet, daß die Güte der Bandsperre angepaßt werden kann.

7. Einrichtung nach einem der Ansprüche 1 bis 6, dadurch gekennzeichnet, daß die periodisch schwankende Größe die Drehzahl einer Welle der Brennkraftmaschine ist und als Sensor ein Inkrementsensor, der ein mit einer Welle der Brennkraftmaschine verbundenes Inkrementrad abtastet, vorgesehen ist.

8. Einrichtung nach einem der Ansprüche 1 bis 6, dadurch gekennzeichnet, daß die periodisch schwankende Größe der Saugrohrdruck der Brennkraftmaschine ist und als Sensor ein Drucksensor im Ansaugrohr vorgesehen ist.

## Claims

1. Detection device for a periodically fluctuating quantity in an internal combustion engine in a motor vehicle, comprising a sensor which delivers a periodically fluctuating output signal which is supplied to a filter device, characterised in that the filter device is a band-stop filter the centre frequency of which is variable, and in that the output signal of the band-stop filter is used for further processing.

2. Device according to Claim 1, characterised in that the centre frequency of the band-stop filter is changed in dependence on the ignition frequency or the frequency of other noise sources.

3. Device according to Claim 1, characterised in that the centre frequency of the band-stop filter is changed in dependence on preceding rotational-speed values.

4. Device according to Claim 1, characterised in that the centre frequency of the band-stop filter is selected in such a manner that it corresponds to the ignition frequency.

5. Device according to one of the preceding claims, characterised in that the quality factor of the band-stop filter is about Q = 0.5.

6. Device according to one of Claims 1 to 4, characterised in that the quality factor of the band-stop filter can be adapted.

7. Device according to one of Claims 1 to 6, characterised in that the periodically fluctuating quantity is the rotational speed of a shaft of the internal combustion engine and an incremental sensor which scans an incremental wheel connected to a shaft of the internal combustion engine is provided as sensor.

8. Device according to one of Claims 1 to 6, characterised in that the periodically fluctuating quantity is the intake pipe pressure of the internal combustion engine and a pressure sensor in the intake pipe is provided as sensor.

## Revendications

1. Dispositif de détection d'une grandeur fluctuant périodiquement dans un moteur à combustion interne d'un véhicule automobile, comprenant un capteur qui fournit un signal de sortie fluctuant de manière périodique, le signal étant appliqué à un filtre, dispositif caractérisé en ce que le filtre est un filtre réjecteur dont la fréquence médiane est variable et le signal de sortie du filtre réjecteur est utilisé pour la suite du traitement.

2. Dispositif selon la revendication 1, caractérisé en ce que la fréquence médiane du filtre réjecteur est modifiée en fonction de la fréquence d'allumage ou de la fréquence de toutes autres sources de parasites.

3. Dispositif selon la revendication 1, caractérisé en ce que la fréquence médiane du filtre réjecteur est modifiée en fonction de la vitesse de rotation précédente.

4. Dispositif selon la revendication 1, caractérisé en ce que la fréquence médiane du filtre réjecteur est choisie pour correspondre à la fréquence d'allumage.

5. Dispositif selon l'une des revendications précédentes, caractérisé en ce que la qualité du filtre réjecteur est de l'ordre de Q = 0,5.

6. Dispositif selon l'une des revendications 1 à 4, caractérisé en ce que la qualité du filtre récepteur est adaptable.

7. Dispositif selon l'une des revendications 1 à 6, caractérisé en ce que la grandeur variant périodiquement est la vitesse de rotation d'un axe du moteur à combustion interne et le capteur est un capteur d'incrément détectant une roue incrémentale ou roue phonique portée par l'axe du moteur à combustion interne.

8. Dispositif selon l'une des revendications 1 à 6, caractérisé en ce que la grandeur variant périodiquement est la pression dans la tubulure d'aspiration du moteur à combustion interne et le capteur est un capteur de pression placé dans la tubulure d'aspiration.
